# EUROPÄISCHE PATENTSCHRIFT

(11) **EP 3 183 607 B1**
(45) Veröffentlichungstag und Bekanntmachung des Hinweises auf die Patenterteilung: **28.11.2018**
(21) Anmeldenummer: 15763815.6
(22) Anmeldetag: 18.08.2015
(51) Int. Cl.: G02B 6/122, G02B 6/126, G02F 1/01, G02B 6/10, G02B 6/12, G02F 1/095

(54) **OPTISCHE DIODE**
OPTICAL DIODE
DIODE OPTIQUE

(30) Priorität: 18.08.2014 AT 505732014
(43) Veröffentlichungstag der Anmeldung: 28.06.2017
(73) Patentinhaber: Humboldt Universität zu Berlin, 10099 Berlin (DE)
(72) Erfinder: VOLZ, Jürgen, 1030 Wien (AT); SCHNEEWEISS, Philipp, 1060 Wien (AT); SAYRIN, Clément, 1070 Wien (AT); RAUSCHENBEUTEL, Arno, 1070 Wien (AT)
(74) Vertreter: KLIMENT & HENHAPEL
(86) Internationale Anmeldenummer: PCT/AT2015/000111
(87) Internationale Veröffentlichungsnummer: WO 2016/025970

(56) Entgegenhaltungen:
- WO-A1-2014/034970
- R. MITSCH ET AL: "Exploiting the local polarization of strongly confined light for sub-micrometer-resolution internal state preparation and manipulation of cold atoms", PHYSICAL REVIEW A (ATOMIC, MOLECULAR, AND OPTICAL PHYSICS), Bd. 89, Nr. 6, 1. Juni 2014 (2014-06-01), XP055231796, USA ISSN: 1050-2947, DOI: 10.1103/PhysRevA.89.063829
- VAN PARYS WOUTER ET AL: "Transverse magnetic mode nonreciprocal propagation in an amplifying AlGaInAs/InP optical waveguide isolator", APPLIED PHYSICS LETTERS, AMERICAN INSTITUTE OF PHYSICS, 2 HUNTINGTON QUADRANGLE, MELVILLE, NY 11747, Bd. 88, Nr. 7, 15. Februar 2006 (2006-02-15), Seiten 71115-071115, XP012082828, ISSN: 0003-6951, DOI: 10.1063/1.2174106
- PELTZER J J ET AL: "Plasmonic micropolarizers for full Stokes vector imaging", POLARIZATION: MEASUREMENT, ANALYSIS, AND REMOTE SENSING X, SPIE, 1000 20TH ST. BELLINGHAM WA 98225-6705 USA, Bd. 8364, Nr. 1, 11. Mai 2012 (2012-05-11) , Seiten 1-12, XP060012184, DOI: 10.1117/12.919324 [gefunden am 1901-01-01]

## Beschreibung

### GEBIET DER ERFINDUNG

Die vorliegende Erfindung betrifft eine optische Diode umfassend einen optischen Wellenleiter zur Leitung von Licht, vorzugsweise einer Lichtmode, mit einer Vakuum-Wellenlänge λ₀, wobei der optische Wellenleiter einen Wellenleiterkern mit einem ersten Brechungsindex n₁ aufweist und der Wellenleiterkern von mindestens einem zweiten optischen Medium umgeben ist, welches mindestens einen zweiten Brechungsindex n₂ aufweist, wobei n₁ > n₂ gilt, wobei der Wellenleiterkern zumindest abschnittsweise eine kleinste laterale Abmessung aufweist, die eine kleinste Abmessung eines Querschnitts normal auf eine Ausbreitungsrichtung des Lichts im Wellenleiterkern ist, wobei die kleinste laterale Abmessung größer gleich λ₀/(5*n₁) und kleiner gleich 20*λ₀/n₁ ist, wobei die optische Diode weiters mindestens ein Absorberelement umfasst, das in einem Nahfeld angeordnet ist, wobei das Nahfeld aus dem elektromagnetische Feld des Lichts der Vakuum-Wellenlänge λ₀ im Wellenleiterkern und außerhalb des Wellenleiterkerns bis zu einem Normalabstand von 5*λ₀ besteht, wobei der Normalabstand von einer eine optische Grenzfläche ausbildenden Oberfläche des Wellenleiterkerns aus und in einer Richtung normal auf die Oberfläche gemessen ist.

### STAND DER TECHNIK

Bei der Ausbreitung von optischen Signalen in optischen Wellenleitern, wie z.B. in Glasfasern oder in auf Chips integrierten Wellenleiterstrukturen, kommt es immer wieder zu unerwünschten Reflexionen der Signale. Dies kann dazu führen, dass die Signale im Vergleich zu ihrer ursprünglichen Ausbreitungsrichtung in der entgegengesetzten Richtung propagieren und dadurch die Signalquelle stören und/oder als Störsignale zu Rauschen führen. Darüberhinaus können diese unkontrolliert reflektierten Signale eine Gefahr für diverse optische Komponenten darstellen. Vor allem Laser und Laserdioden, die oft als Signalquellen verwendet werden, werden durch solches Licht in ihrer Funktionsweise gestört, was zu einer instabilen Betriebsweise mit Wellenlängen- und/oder Leistungsschwankungen führt - und im Extremfall sogar zur Zerstörung des Lasers. Für viele optische Anwendungen wäre es deswegen wichtig, Elemente zu realisieren, in denen sich Licht nur in eine Richtung ausbreiten kann, sodass die immer auftretenden Reflexionen herausgefiltert werden können und nicht entgegen der gewünschten Richtung propagieren. Solche Elemente werden als optische Dioden und manchmal auch als direktionale optische Wellenleiter oder als optische Isolatoren bezeichnet.

Für die Implementierung von optischen Dioden ist es aus dem Stand der Technik bekannt, sogenannte Faraday-Isolatoren einzusetzen. In diesen Systemen kommt es durch das Anlegen eines starken Magnetfelds zu einer Drehung der Polarisation des transmittierten Lichts, d.h. es wird der Faraday-Effekt ausgenutzt. Diese Polarisation kann zusammen mit Polarisationsfiltern dazu ausgenutzt werden, die zurückreflektierten Signale zu absorbieren oder umzuleiten.

Für praktische Anwendungen haben solche Systeme allerdings eine Reihe von Nachteilen. Abgesehen davon, dass ein hohes Magnetfeld benötigt wird, was dazu führen kann, dass sich mehrere Faraday-Isolatoren gegenseitig und/oder andere in der Nähe befindlichen Komponenten stören, ist vor allem die schlechte Integrierbarkeit dieser Lösung zu nennen. Zwar sind faserintegrierte Lösungen bekannt, diese weisen aber immer noch Längen von mehreren Zentimetern auf. Eine Möglichkeit zur Integration in integrierte optische Schaltkreise, insbesondere in/auf Chips, bzw. zur Miniaturisierung ist nicht erkennbar.

Darüberhinaus weisen auf Faraday-Isolatoren basierende Lösungen eine starke Wellenlängenabhängigkeit bzw. eine sehr geringe Bandbreite auf. D.h. unerwünschte Reflexionen von Licht, dessen Wellenlänge auch nur wenig von einer vorgegebenen Wellenlänge abweicht, können nicht mehr zuverlässig herausgefiltert werden.

Schließlich sind auf Faraday-Isolatoren basierende Lösungen sehr teuer.

Aus der DE 2333272 A1 ist ein optischer Isolator bekannt, der einen Wellenleiter und eine magnetische Schicht umfasst, welche oberhalb des Wellenleiters auf diesem angeordnet ist. Die magnetische Schicht ist dabei parallel zu einer Fläche des Wellenleiters und normal zur Übertragungsrichtung der Lichtstrahlen im Wellenleiter magnetisiert. Aufgrund der Wechselwirkung zwischen dem magnetischen Feld des Lichts und der magnetischen Schicht kommt es zu einer propagationsrichtungsabhängigen Eindringtiefe der lateralen Intensitätsverteilung in die magnetische Schicht. Entsprechend findet in Abhängigkeit von der Propagationsrichtung eine unterschiedlich starke Absorption des Lichts in der magnetischen Schicht statt.

R. Mitsch et al., Phys. Rev. A 89, 063829 (2014), "Exploiting the local polarization of strongly confined light for sub-micrometer-resolution internal state preparation and manipulation of cold atoms" betrifft die Manipulation von Cs-Atomen in einem optischen Quantensystem auf der Nanoskala, wobei die Cs-Atome in einem evaneszenten Lichtfeld, das aus einer optischen Nanofaser tritt, angeordnet sind. Dabei wird eine frequenzabhängige Transmission durch die Faser offenbart.

### AUFGABE DER ERFINDUNG

Es ist daher Aufgabe der vorliegenden Erfindung, eine optische Diode zur Verfügung zu stellen, die die geschilderten Nachteile vermeidet. Insbesondere soll eine in/auf Chips integrierbare bzw. miniaturisierbare Lösung geschaffen werden, die sich direkt mit optischen Glasfasern und/oder integrierten Wellenleitern verbinden lässt.

### DARSTELLUNG DER ERFINDUNG

Kern der Erfindung ist es, eine optische Diode, die für Licht mit Vakuum-Wellenlänge λ₀, das in eine Richtung propagiert transparent ist, aber eine starke, vorzugsweise sogar einstellbare Absorption für Licht mit Vakuum-Wellenlänge λ₀ aufweist, das sich in der entgegengesetzten Richtung ausbreitet, durch Ausnutzung des Effekts der sogenannten Spin-Orbit Kopplung von Licht, im Folgenden als SOKL bezeichnet, zu realisieren. Dieser Effekt ist in der wissenschaftlichen Literatur gut dokumentiert, siehe z.B. Konstantin Y. Bliokh et al., "Spin-orbit interactions of light in isotropic media" in "The Angular Momentum of Light" (Eds. David L. Andrews & Mohamed Babiker, Cambridge University Press, 2012; Online ISBN:9780511795213) oder Konstantin Y. Bliokh et al., "Extraordinary momentum and spin in evanescent waves", Nature Communications 5, Article number:3300, doi:10.1038/ncomms4300 (2014).

SOKL tritt bei der Ausbreitung von Licht in einem räumlich sehr begrenzten optischen Wellenleiter auf, weshalb eine auf SOKL basierende Lösung zwangsläufig zu einer miniaturisierten Lösung führt, die sich exzellent zur Integration eignet, insbesondere zur Integration bei auf einem Chip angeordneten optischen Leiterbahnen. Spin-Orbit-gekoppeltes Licht weist eine Korrelation des lokalen zirkularen Polarisationszustands des Lichts (d.h. des Photonenspins) mit der Ausbreitungsrichtung (orbitaler Drehimpuls) des Lichts und/oder der Position innerhalb des Strahlquerschnitts des Lichtfeldes auf. Dabei steht der Photonenspin im betrachteten Fall einer erfindungsgemäßen optischen Diode mit einem räumlich sehr begrenzten Wellenleiter immer senkrecht zu einer Ausbreitungsrichtung des Lichts im Wellenleiter. Genauer, ein Normalvektor jener Ebene, in welcher sich der Vektor des elektrischen (bzw. magnetischen) Feldes gemäß der lokalen zirkularen Polarisation dreht, steht immer senkrecht zur Ausbreitungsrichtung des Lichts im Wellenleiter.

Das Licht wird im Wellenleiter in einem Wellenleiterkern bzw. einem optischen Medium mit einem ersten Brechungsindex n₁ geleitet. Der Wellenleiterkern ist von mindestens einem zweiten optischen Medium umgeben bzw. grenzt der Wellenleiterkern mit einer optischen Grenzfläche an das mindestens eine zweite optische Medium, welches einen Mantel für den Wellenleiterkern bildet. Das im Wellenleiter geführte Licht ist räumlich nicht auf den Wellenleiterkern beschränkt, sondern ragt in das mindestens eine zweite optische Medium (als evaneszente Welle) hinein. Das mindestens eine zweite optische Medium weist mindestens einen zweiten Brechungsindex n₂ auf, wobei n₁ > n₂ gilt. Je stärker der Kontrast der Brechungsindizes ist, desto ausgeprägter ist der SOKL-Effekt. D.h. die erfindungsgemäße optische Diode ist grundsätzlich nicht auf bestimmte Materialien beschränkt. Insbesondere lässt sie sich daher durch die ohnehin weit verbreiteten Materialien für optische Wellenleiter bzw. Wellenleiterkerne, wie z.B. Si, GaAs, Glas oder Quarzglas, SiO₂ realisieren.

Aufgrund des SOKL-Effekts ist das Lichtfeld beispielsweise an manchen Stellen rechtszirkular polarisiert, wohingegen in dem Fall, in dem das Licht in die entgegengesetzte Richtung propagiert, ein linkszirkularer Polarisationszustand an derselben Stelle auftritt. Dieser Effekt wird im Nahfeld des optischen Wellenleiters bzw. Wellenleiterkerns beobachtet, welcher das in ihm geführte Licht durch seine knappe laterale Dimensionierung lateral stark komprimiert. Dabei bedeutet "lateral" quer zur Ausbreitungsrichtung des Lichts im optischen Wellenleiter. Optimale Ergebnisse für den SOKL-Effekt werden erzielt, indem die Dimensionierung des Wellenleiterkerns so gewählt ist, dass eine kleinste laterale Abmessung des Wellenleiterkerns größer gleich λ₀/(5*n₁) und kleiner gleich 20*λ₀/n₁ ist. Der untere Grenzwert garantiert eine hinreichende Transmission des Wellenleiters bzw. des Wellenleiterkerns. Der obere Grenzwert garantiert neben einem hinreichend starken Auftreten des SOKL-Effekts auch eine gute Fokussierung und damit Kopplung des geführten Lichtfelds an im Nahfeld angeordnete Absorberelemente. Diese Kopplung wäre bei lateral noch größeren Wellenleiterkernen aufgrund der entsprechend größeren lateralen Ausdehnung der geführten Lichtmoden nur sehr klein. Hierzu sei bemerkt, dass es aufgrund des Grenzwertes 20*λ₀/n₁ auch dazu kommen kann, dass nicht nur eine einzelne Lichtmode bzw. eine Grund- oder Fundamentalmode im Wellenleiter geleitet wird, was jedoch für die prinzipielle Funktionsweise der erfindungsgemäßen optischen Diode nicht hinderlich ist. D.h. die erfindungsgemäße optische Diode kann grundsätzlich auch in einem Multimoden-Modus betrieben werden.

Die konkrete Gestalt des Querschnitts des optischen Wellenleiters spielt dabei keine Rolle. Dieser kann beispielsweise eckig, insbesondere rechteckig sein oder z.B. rund, insbesondere kreisförmig oder ellipsenförmig.

"Im Nahfeld" bedeutet im Bereich einer eine optische Grenzfläche ausbildenden Oberfläche des Wellenleiterkerns, die (in lateraler Richtung) ein optisch dichteres Medium (Wellenleiterkern) von einem optisch dünneren Medium (das mindestens eine zweite Medium) trennt. Genauer wird unter "Nahfeld" im Sinne der gegenständlichen Erfindung das elektromagnetische Feld des Lichts der Vakuum-Wellenlänge λ₀ im Wellenleiterkern und außerhalb des Wellenleiterkerns bis zu einem Normalabstand von 5*λ₀ verstanden, wobei der Normalabstand von der Oberfläche des Wellenleiterkerns aus und normal auf diese gemessen wird.

Positioniert man nun polarisationsabhängige Absorberelemente im Nahfeld, so ist je nach Bewegungsrichtung im Wellenleiter das Licht am Punkt des jeweiligen Absorberelements unterschiedlich polarisiert - einmal linkszirkular und einmal rechtszirkular. Es tritt daher in Vorwärts- und Rückwärtsrichtung eine unterschiedliche Absorption auf, und man erhält eine optische Diode. Die obige Definition von "Nahfeld" garantiert eine noch hinreichend starke Intensität des Lichts der Vakuum-Wellenlänge λ₀ im Wellenleiterkern und auch außerhalb des Wellenleiterkerns bis zu dem angegebenen Normalabstand, wobei das Licht in letzterem Bereich als evaneszente Welle vorliegt, deren Intensität exponentiell mit dem Normalabstand abfällt. Somit ist sichergestellt, dass eine ausreichend hohe Kopplung zwischen dem Licht der Vakuum-Wellenlänge λ₀ und den Absorberelementen gegeben ist. Je nach Polarisation des Lichts an der Position des jeweiligen Absorberelements kommt es daher zu einer Absorption, die die optische Leistung des insgesamt durch den Wellenleiter geleiteten Lichts der Vakuum-Wellenlänge λ₀ um einen für den jeweiligen Absorber charakteristischen Betrag erniedrigt. Unter "optischer Leistung" ist dabei das Integral der Intensität des sich ausbreitenden Lichtfeldes über dessen Querschnittsfläche zu verstehen. Für die Wechselwirkung bzw. Kopplung des Lichtfeldes mit einem an einem bestimmten Ort platzierten Absorberelement ist u.a. die Intensität des Lichtfelds an diesem Ort ausschlaggebend.

Durch Wahl der Art der Absorberelemente und durch Variation der Anzahl der Absorberelemente lässt sich die Stärke der Absorption insgesamt sowie die Bandbreite der optischen Diode einstellen, d.h. das Wellenlängenintervall, in welchem die Funktionalität der Diode gewährleistet ist. Die Positionierung der Absorberelemente spielt dabei insofern eine Rolle, als diese vorteilhafterweise möglichst so positioniert werden, dass sie in einem möglichst vollständig zirkular polarisierten Bereich des sich im Wellenleiter ausbreitenden Lichts bzw. der sich im Wellenleiter ausbreitenden Lichtmode angeordnet sind.

Dabei kann das Auftreten der lokalen zirkularen Polarisation noch genauer spezifiziert werden, wie folgt. Üblicherweise werden transversal polarisierte Moden in Wellenleitern transportiert. Aufgrund der knappen lateralen Dimensionen des Wellenleiterkerns der optischen Diode wird Licht grundsätzlich in einem hybrid polarisierten Zustand, welcher sowohl transversale als auch longitudinale Komponenten der Polarisation aufweist, im Wellenleiter bzw. Wellenleiterkern geleitet. Relevant für die erfindungsgemäße Funktionsweise der optischen Diode sind Lichtfelder mit quasi-linearem Polarisationszustand, welcher sich automatisch ergibt, wenn linear polarisiertes Licht, wie es in gängigen Glasfasernetzen üblicherweise verwendet wird, durch einen optischen Wellenleiter mit einem lateral knapp bemessenen Wellenleiterkern geleitet wird. Die erfindungsgemäße optische Diode umfasst daher einen Wellenleiter, der so ausgelegt ist, dass er für die Leitung von quasi-linear polarisiertem Licht der Vakuum-Wellenlänge λ₀ geeignet ist.

"Quasi-linear polarisiert" bedeutet, dass prinzipiell eine Hauptpolarisationsebene existiert, die normal auf die Ausbreitungsrichtung steht und in der zwei Komponenten des Vektors des elektrischen Feldes transversal schwingen. Außerdem existiert eine nicht transversale, sondern longitudinale Komponente des elektrischen Feldes, die jedoch relativ zu den transversalen Komponenten um 90° phasenverschoben ist, wodurch sich im Bereich der optischen Grenzfläche zirkular polarisiertes Licht ergibt. Da die longitudinale Komponente in der Hauptpolarisationsebene am größten ist, müssen für eine optimale Absorption die Absorberelemente möglichst in der Hauptpolarisationsebene angeordnet sein.

Daher ist es bei einer optischen Diode umfassend einen optischen Wellenleiter zur Leitung von Licht, vorzugsweise einer Lichtmode, mit einer Vakuum-Wellenlänge λ₀, wobei der optische Wellenleiter einen Wellenleiterkern mit einem ersten Brechungsindex n₁ aufweist und der Wellenleiterkern von mindestens einem zweiten optischen Medium umgeben ist, welches mindestens einen zweiten Brechungsindex n₂ aufweist, wobei n₁ > n₂ gilt, erfindungsgemäß vorgesehen, dass der Wellenleiterkern zumindest abschnittsweise eine kleinste laterale Abmessung aufweist, die eine kleinste Abmessung eines Querschnitts normal auf eine Ausbreitungsrichtung des Lichts im Wellenleiterkern ist, wobei die kleinste laterale Abmessung größer gleich λ₀/(5*n₁) und kleiner gleich 20*λ₀/n₁ ist, dass die optische Diode weiters mindestens ein Absorberelement umfasst, das in einem Nahfeld angeordnet ist, wobei das Nahfeld aus dem elektromagnetische Feld des Lichts der Vakuum-Wellenlänge λ₀ im Wellenleiterkern und außerhalb des Wellenleiterkerns bis zu einem Normalabstand von 5*λ₀ besteht, wobei der Normalabstand von einer eine optische Grenzfläche ausbildenden Oberfläche des Wellenleiterkerns aus und in einer Richtung normal auf die Oberfläche gemessen ist, und dass das mindestens eine Absorberelement für das Licht der Vakuum-Wellenlänge λ₀ bei linkszirkularer Polarisation einerseits und bei rechtszirkularer Polarisation andererseits eine unterschiedlich starke Absorption aufweist.

Eine Vorrichtung mit einem derartigen Aufbau kann also als optische Diode verwendet werden. Man beachte, dass das mindestens eine Absorberelement gemäß der angegebenen Definition des Begriffs "Nahfeld" im Sinne der gegenständlichen Erfindung nicht notwendigerweise außerhalb des optischen Wellenleiters angeordnet sein muss, sondern auch innerhalb des optischen Wellenleiters positioniert sein kann.

Wenn von Licht mit bzw. der Vakuum-Wellenlänge λ₀ die Rede ist, so versteht es sich, dass dieses Licht im Wellenleiterkern und/oder am Ort des mindestens einen Absorberelements im Allgemeinen eine von λ₀ unterschiedliche, kleinere Wellenlänge λ aufweisen wird - je nach Größe des Brechungsindex des Wellenleiterkerns bzw. des mindestens einen zweiten optischen Mediums, in dem sich das mindestens eine Absorberelement befindet.

Üblicherweise vermag ein einziges Absorberelement die optische Leistung des Lichts bzw. der Lichtmode im Wellenleiter lediglich um einen gewissen Betrag oder Bruchteil zu schwächen, sodass keine vollständige Absorption vorliegt. Dies ermöglicht es, die Stärke der Absorption durch die gesamte Diode zu variieren, indem mehrere Absorberelemente vorgesehen werden. Je nach Größe bzw. Stärke der Absorption durch ein einziges Absorberelement kann die Variation der Stärke der Absorption durch die gesamte optische Diode stufenweise (bei relativ starker Absorption durch ein einziges Absorberelement) bis quasi kontinuierlich (bei sehr kleiner bzw. schwacher Absorption durch ein einziges Absorberelement) erfolgen. Entsprechend ist es bei einer bevorzugten Ausführung der erfindungsgemäßen optischen Diode vorgesehen, dass eine Vielzahl von Absorberelementen vorgesehen ist.

Aufgrund der genannten lateralen Dimensionen des optischen Wellenleiters eignet sich die erfindungsgemäße optische Diode ideal als Teil eines integrierten optischen Schaltkreises auf einem Chip, insbesondere für Anwendungen in der Nanooptik bzw. Nanophotonik. Insbesondere beim Aufbau von solchen integrierten optischen Schaltkreisen kann der optische Wellenleiterkern als optische Leiterbahn auf einem Substrat, beispielsweise auf einem photonischen Si-Chip oder einem SiO₂-Substrat erfolgen. Solche optischen Leiterbahnen können mit gängigen Lithographie-Methoden und weit verbreiteten Materialien, z.B. Glas, Quarzglas, Si, GaAs etc., hergestellt werden. Entsprechend ist es bei einer bevorzugten Ausführung der erfindungsgemäßen optischen Diode vorgesehen, dass der optische Wellenleiter auf einem Substrat angeordnet ist.

Wie bereits festgehalten, wirkt sich der Kontrast der Brechungsindizes des Wellenleiterkerns und des Substrats auf den SOKL-Effekt und damit auch auf die Leistungsfähigkeit der optischen Diode aus. Folgende Zusammenstellung von Materialien für den Wellenleiterkern einerseits und das Substrat andererseits soll dies für eine bestimmte Kombination von Licht der Vakuum-Wellenlänge λ₀ und einer bestimmten Art genau eines Absorberelements veranschaulichen. Dabei ist A_{f} der Absorptionskoeffizient des Absorberelements für eine vorwärts laufende Mode, d.h. wenn die optische Diode in Vorwärtsrichtung betrieben wird. A_{b} bezeichnet den Absorptionskoeffizient des Absorberelements für eine rückwärts laufende Mode, d.h. bei Betrieb der optischen Diode in entgegengesetzter Richtung bzw. Sperrrichtung. Der Absorptionskoeffizient ist allgemein definiert über das Verhältnis der vom Absorberelement gestreuten bzw. absorbierten optischen Leistung geteilt durch die optische Leistung des einlaufenden Lichtfeldes. Das Verhältnis der Absorptionen bzw. A_{b}/A_{f} kann unabhängig von der Anzahl der Absorberelemente und gleichzeitig unabhängig von der konkreten Kopplung des Absorberelements zum Licht bzw. zur Lichtmode berechnet werden. Es ergeben sich die folgenden Verhältnisse:
a) n₁/n₂ = 1,53/1,45 (SiO₂ / SiO₂, jedoch unterschiedlich dotiert) : A_{b}/A_{f} = 3,8
b) n₁/n₂ = 1,45 (Glas / Luft) : A_{b}/A_{f} = 39
c) n₁/n₂ = 3/1,45 (Si / SiO₂) : A_{b}/A_{f} = 227
d) n₁/n₂ = 3, 5/1, 45 (GaAs / SiO₂) : A_{b}/A_{f} = 452
e) n₁/n₂ = 1,45/1,38 (SiO₂ / Magnesiumfluorid) : A_{b}/A_{f} = 3,5
f) n₁/n₂ = 1, 45/1, 34 (SiO₂ / Cytop) : A_{b}/A_{f} = 5

Die gängigen lithographischen Herstellungsmethoden umfassen üblicherweise die Belichtung eines Fotolacks (auch Photoresist genannt) mit einem anschließenden Ätzschritt. Auf diese Weise lassen sich auch im Substrat zumindest teilweise versenkte Wellenleiterstrukturen bzw. Wellenleiterkerne erzeugen. Einerseits kann auf diese Weise der Kontrast der Brechungsindizes zwischen Wellenleiterkern und Substrat über einen großen Bereich des Wellenleiterkerns genutzt werden. Andererseits ermöglicht das Versenken des Wellenleiterkerns bis zu einer gewünschten Tiefe, die Positionierung von Absorberelemente auf einer gewünschten Höhe bezogen auf eine Höhenrichtung des Wellenleiterkerns, wobei die Höhenrichtung normal auf eine Substratoberfläche steht. Die Absorberelemente müssen dafür lediglich auf dem Substrat neben dem Wellenleiterkern angeordnet werden. Daher ist es bei einer bevorzugten Ausführung der erfindungsgemäßen optischen Diode vorgesehen, dass der Wellenleiterkern zumindest abschnittsweise im Substrat versenkt ist. "Abschnittsweise" kann sich dabei sowohl auf die Höhenrichtung des Wellenleiterkerns als auch auf eine Längsrichtung des Wellenleiterkerns bzw. auf die Ausbreitungsrichtung des Lichts im Wellenleiterkern beziehen.

Als Absorberelemente kommen unterschiedlichste Mittel in Frage. Beispielsweise können sogenannte Quantenpunkte als Absorberelemente im Nahfeld angeordnet werden, was z.B. durch Molekularstrahl-Epitaxie erreicht werden kann. Solche Quantenpunkte sind aus der Literatur wohlbekannt, siehe z.B. Jan Dreiser et al., "Optical investigations of quantum dot spin dynamics as a function of external electric and magnetic fields", Physical Review B 77, 075317 (2008), wo Untersuchungen an InAs/GaAs-Quantenpunkten geschildert werden. Insbesondere einfach geladene Quantenpunkte sind geeignete Absorberelemente, da sie für rechtszirkular polarisiertes Licht und linkszirkular polarisiertes Licht unterschiedliche Resonanzfrequenzen aufweisen. Wenn also beispielsweise linkszirkular polarisiertes Licht einer bestimmten Wellenlänge von einem solchen Quantenpunkt resonant absorbiert wird, wird derselbe Quantenpunkt rechtszirkular polarisiertes Licht derselben Wellenlänge im Allgemeinen nicht resonant absorbieren.

Da die Polarisation des im Wellenleiter bzw. Wellenleiterkern geleiteten Lichts an einem Punkt im Nahfeld von der Propagationsrichtung des Lichts abhängt, kommt es beim Einsatz eines solchen Quantenpunkts als Absorberelement zu einer richtungsabhängigen Absorption. D.h. es liegt eine optische Diode vor. Daher ist es bei einer bevorzugten Ausführung der erfindungsgemäßen optischen Diode vorgesehen, dass als das mindestens eine Absorberelement mindestens ein, vorzugsweise einfach geladener Quantenpunkt vorgesehen ist.

Um eine einfache Herstellung der optischen Diode zu ermöglichen, ist es bei einer bevorzugten Ausführung der erfindungsgemäßen optischen Diode vorgesehen, dass der mindestens eine Quantenpunkt außerhalb des Wellenleiterkerns angeordnet ist.

Um die Stärke der Absorption der optischen Diode insgesamt einstellen bzw. festlegen zu können, ist es bei einer bevorzugten Ausführung der erfindungsgemäßen optischen Diode vorgesehen, dass eine Vielzahl von Quantenpunkten vorgesehen ist, wobei die Quantenpunkte parallel zur Ausbreitungsrichtung angeordnet sind.

Um die Bandbreite der optischen Diode zu erhöhen, ist es bei einer bevorzugten Ausführung der erfindungsgemäßen optischen Diode vorgesehen, dass die Vielzahl an Quantenpunkten Quantenpunkte umfasst, die für Licht unterschiedlicher Wellenlänge bei linkszirkularer Polarisation einerseits und bei rechtszirkularer Polarisation andererseits eine unterschiedlich starke Absorption aufweisen. Quantenpunkte, die sich hierin unterscheiden bzw. die entsprechend unterschiedliche Resonanzfrequenzen aufweisen, können erzeugt werden, indem beispielsweise gezielt deren chemische Struktur und/oder geometrische Form und/oder eine einwirkende mechanische Spannung variiert wird. Weiterhin können, wie weiter unten noch näher ausgeführt werden wird, bei ausgewählten Quantenpunkten bzw. ausgewählten Ensembles von Quantenpunkten deren Resonanzfrequenzen gezielt durch Anlegen von lokalen elektrischen und/oder magnetischen Feldern variiert werden.

Insbesondere ist es bei einer besonders bevorzugten Ausführungsform der erfindungsgemäßen optischen Diode vorgesehen, dass ein sich ergebendes Intervall von Wellenlängen, in dem die unterschiedlich starke Absorption auftritt, eine Breite aufweist, die größer als 1 nm, vorzugsweise größer gleich 10 nm, besonders bevorzugt größer gleich 30 nm ist. Das jeweilige Intervall bzw. die Bandbreite der Diode kann auf den konkreten Anwendungsfall abgestimmt werden, wobei auch engere Bandbreiten, z.B. rund 0,5 nm, oder noch weit größere Bandbreiten, z.B. rund 50 nm realisiert werden können.

Zusätzlich oder alternativ können auch Fremdatome als Absorberelemente eingesetzt werden, die linkszirkular und rechtszirkular polarisiertes Licht einer bestimmten Wellenlänge unterschiedlich stark resonant absorbieren. Indem diese Fremdatome in den Wellenleiterkern integriert werden, wird automatisch sichergestellt, dass sich diese Absorberelemente jedenfalls im Nahfeld befinden. Daher ist es bei einer bevorzugten Ausführung der erfindungsgemäßen optischen Diode vorgesehen, dass Fremdatome im Wellenleiterkern als Absorberelemente vorgesehen sind. Diese bilden in der Regel atomare Störstellen im Wellenleiterkern.

Eine besonders einfache Herstellung ergibt sich für Wellenleiterkerne aus Halbleitermaterialien. In diesem Fall können Dotieratome als Fremdatome vorgesehen sein. Somit kann bei der Erzeugung grundsätzlich auf eine Vielzahl von unterschiedlichsten und wohlbekannten Methoden zur Herstellung von dotierten Halbleitern zurückgegriffen werden kann. Daher ist es bei einer besonders bevorzugten Ausführung der erfindungsgemäßen optischen Diode vorgesehen, dass der Wellenleiterkern aus einem Halbleitermaterial besteht und die Fremdatome Dotieratome für das Halbleitermaterial sind.

Insbesondere kann es sich bei dem Halbleitermaterial des Wellenleiterkerns um Silizium handeln. In diesem Fall kann es sich bei den Fremdatomen vorzugsweise um Bor-Atome handeln.

Die Unterschiedlichkeit der Stärke der Absorption von rechtszirkular und linkszirkular polarisiertem Licht bei den beispielhaft genannten Quantenpunkten und Fremdatomen basiert auf der Anregung unterschiedlicher elektronischer Energieniveaus des jeweiligen Absorberelements. Bei solchen Absorberelementen kann, wie bereits erwähnt, die Unterschiedlichkeit der Stärke der Absorption von rechtszirkular und linkszirkular polarisiertem Licht variiert werden, indem die Absorberelemente einem Magnetfeld ausgesetzt werden. Dies ist aus der wissenschaftlichen Literatur für wohlbekannt. Beispielhaft sei hier für Magnetfeldern ausgesetzten Atome auf Solomon Zwerdling et al., "Zeeman Effect of Impurity Levels in Silicon", Physical Review 118, 975 (1960) verwiesen. Für Quantenpunkte in Magnetfeldern sei exemplarisch auf folgende, bereits genannte Arbeit verwiesen: Jan Dreiser et al., "Optical investigations of quantum dot spin dynamics as a function of external electric and magnetic fields", Physical Review B 77, 075317 (2008). Daher ist es bei einer bevorzugten Ausführung der erfindungsgemäßen optischen Diode vorgesehen, dass Mittel zur Erzeugung von mindestens einem Magnetfeld an der Position des mindestens einen Absorberelements vorgesehen sind, um den Unterschied zwischen der Stärke der Absorption von linkszirkular polarisiertem Licht der Vakuum-Wellenlänge λ₀ durch das mindestens eine Absorberelement und der Stärke der Absorption von rechtszirkular polarisiertem Licht der Vakuum-Wellenlänge λ₀ durch das mindestens eine Absorberelement zu verstärken.

Die Variation der Stärke der polarisationsabhängigen unterschiedlichen Absorption kommt im Wesentlichen dadurch zustande, dass das angelegte Magnetfeld die Aufspaltung der Resonanzfrequenzen für die jeweilige resonante Absorption von links- und rechtszirkular polarisiertem Licht erhöht. Dies eröffnet die Möglichkeit durch Anlegen unterschiedlicher Magnetfelder die Bandbreite der optischen Diode zu erhöhen. Daher ist es bei einer bevorzugten Ausführung der erfindungsgemäßen optischen Diode vorgesehen, dass das mindestens eine Magnetfeld derart ausgebildet ist, dass verschiedene Teile der Vielzahl an Absorberelementen unterschiedlich starken Magnetfeldern ausgesetzt sind. Dies kann dadurch gewährleistet sein, dass die Absorberelemente einfach unterschiedlich weit weg von den Mitteln angeordnet sind, die ein Magnetfeld erzeugen. Oder es können räumlich verteilte Mittel vorgesehen sein, die unterschiedlich starke Magnetfelder erzeugen.

Das mindestens eine Magnetfeld kann auf einfache Weise beispielsweise mittels Strom erzeugt werden. Daher ist es bei einer bevorzugten Ausführung der erfindungsgemäßen optischen Diode vorgesehen, dass mindestens ein elektrischer Leiter, vorgesehen ist, durch welchen Strom zur Erzeugung des mindestens einen Magnetfelds geleitet werden kann.

Der mindestens eine elektrische Leiter lässt sich insbesondere auf und/oder in einem Substrat auf einfache und in an sich bekannter Weise integrieren. Beispielsweise ist die Herstellung von Kupferbahnen auf und in diversen Substraten wohlbekannt. Die Anordnung im Substrat kann auch nur abschnittsweise erfolgen, sodass nur ein Teil des mindestens einen elektrischen Leiters im Substrat angeordnet ist und ein Teil auf dem Substrat. Ebenso kann der mindestens eine elektrische Leiter - analog zum Wellenleiterkern - auch nur abschnittsweise im Substrat versenkt sein. Daher ist es bei einer besonders bevorzugten Ausführung der erfindungsgemäßen optischen Diode vorgesehen, dass der mindestens eine elektrische Leiter zumindest abschnittsweise auf und/oder im Substrat angeordnet ist.

Ein weiteres, an sich bekanntes Mittel, welches alternativ oder zusätzlich zur Erzeugung des mindestens einen Magnetfeldes verwendet werden kann sind Permanentmagneten. Daher ist es bei einer bevorzugten Ausführung der erfindungsgemäßen optischen Diode vorgesehen, dass mindestens ein Permanentmagnet vorgesehen ist, um das mindestens eine Magnetfeld zu erzeugen.

Wie der elektrische Leiter lässt sich auch der mindestens eine Permanentmagnet auf und/oder im Substrat anordnen. Die Anordnung im Substrat kann auch nur abschnittsweise erfolgen, sodass nur ein Teil des mindestens einen Permanentmagneten im Substrat angeordnet ist und ein Teil auf dem Substrat. Ebenso kann der mindestens eine Permanentmagnet - analog zum Wellenleiterkern - auch nur abschnittsweise im Substrat versenkt sein. Daher ist es bei einer besonders bevorzugten Ausführung der erfindungsgemäßen optischen Diode vorgesehen, dass der mindestens eine Permanentmagnet zumindest abschnittsweise auf und/oder im Substrat angeordnet ist.

Insbesondere bei Fremdatomen als Absorberelemente - aber z.B. auch bei Quantenpunkten als Absorberelemente - besteht die Möglichkeit, ein sogenanntes fiktives Magnetfeld zu nutzen, wobei fiktive Magnetfelder aus der wissenschaftlichen Literatur an sich bekannt sind, vgl. z.B. Claude Cohen-Tannoudji und Jacques Dupont-Roc, "Experimental Study of Zeeman Light Shifts in Weak Magnetic Fields", Physical Review A 5, 968 (1972). Dabei kann ein nicht-resonanter Lichtstrahl zu einer Verschiebung von Energieniveaus führen - völlig analog zum Effekt eines klassischen Magnetfelds. Durch Wahl der Stärke bzw. Intensität sowie des Polarisationszustandes des nicht-resonanten Lichtstrahls kann dabei die Stärke des fiktiven Magnetfelds variiert bzw. gewählt werden. Es ergibt sich somit die elegante Möglichkeit, den Wellenleiter der optischen Diode nicht nur zur Leitung des gewünschten Lichts mit Vakuum-Wellenlänge λ₀ zu verwenden, sondern außerdem zur Leitung des nicht-resonanten Lichts, das zur Erzeugung des fiktiven Magnetfeldes dient. Das nicht-resonante Licht weist dabei eine Vakuum-Wellenlänge λ' auf, wobei λ' ≠ λ₀ gilt. Prinzipiell ist lediglich sicherzustellen, dass sich die Absorberelemente in einem Nahfeld befinden, welches aus dem elektromagnetische Feld des nicht-resonanten Lichts der Vakuum-Wellenlänge λ' im Wellenleiterkern und außerhalb des Wellenleiterkerns bis zu einem Normalabstand von 5*λ' besteht. Es sei bemerkt, dass das nicht-resonante Licht in der Folge natürlich wieder ausgefiltert werden kann, beispielsweise mittels eines dichroitischen Filters. Weiters sei bemerkt, dass das fiktive Magnetfeld bzw. das nicht-resonante Licht zur Erzeugung des fiktiven Magnetfelds alternativ oder zusätzlich zu den anderen Mitteln zur Erzeugung des mindestens einen Magnetfelds eingesetzt werden kann. Daher ist es bei einer bevorzugten Ausführung der erfindungsgemäßen optischen Diode vorgesehen, dass es sich bei dem mindestens einen Magnetfeld um ein sogenanntes fiktives Magnetfeld handelt, wobei zur Erzeugung des fiktiven Magnetfeldes im optischen Wellenleiter geleitetes Licht mit einer Vakuum-Wellenlänge λ' vorgesehen ist, wobei λ' ≠ λ₀ gilt und das mindestens eine Absorberelement in einem weiteren Nahfeld angeordnet ist, welches weitere Nahfeld aus dem elektromagnetische Feld des Lichts der Vakuum-Wellenlänge λ' im Wellenleiterkern und außerhalb des Wellenleiterkerns bis zu einem Normalabstand von 5*λ' besteht.

Je nach Anwendungsfall können unterschiedlich Stärken des mindestens einen Magnetfelds realisiert werden. Insbesondere kann dies auch dynamisch geschehen, d.h. die unterschiedliche Transmission der optischen Diode in Durchlassrichtung und Sperrrichtung sowie die Bandbreite der optischen Diode können dynamisch variiert werden. Entsprechend ist es bei einer bevorzugten Ausführung der erfindungsgemäßen optischen Diode vorgesehen, dass das mindestens eine Magnetfeld an der Position von mindestens einem Absorberelement variierbar ist und vorzugsweise zumindest zeitweise mindestens 1 T, bevorzugt mindestens 3 T, besonders bevorzugt mindestens 5 T beträgt. Selbstverständlich sind je nach Anwendungsfall zumindest zweitweise auch deutlich kleinere Magnetfeldstärken, beispielsweise von inkl. 0,1 T bis inkl. 0,5 T, oder deutlich größere Magnetfeldstärken, beispielsweise mindestens 7 T oder mindestens 10 T an der Position von mindestens einem Absorberelement erzeugbar.

Hohe Magnetfeldstärken können im Falle von konstanten Magnetfeldern auf einfache Weise mittels bekannter Permanentmagneten, beispielsweise auf Basis von NdFeB-Magneten, erzeugt werden, wobei die Distanz zwischen dem jeweiligen Absorberelement und dem Permanentmagnet entsprechend klein zu halten ist. Im Falle von zeitlich variierenden Magnetfeldern können zumindest kurzfristig hohe Magnetfeldstärken durch entsprechend hohe Stromstärken im mindestens einen elektrischen Leiter erzielt werden. Auch hier spielt die Distanz zwischen dem mindestens einen elektrischen Leiter und dem jeweiligen Absorberelement eine entscheidende Rolle.

Dass auch hohe Stärken des fiktiven Magnetfelds erzeugt werden können, soll das folgende allgemeine Beispiel veranschaulichen. Für ein Cäsium-Atom im Vakuum, welches sich 100 nm entfernt von einer Glasfaser mit einem Durchmesser von 500 nm befindet, erzeugt ein quasi-linear polarisiertes geführtes Lichtfeld, welches eine Vakuum-Wellenlänge λ' von 880 nm und eine optische Leistung von 1 mW hat, am Ort des Atoms ein fiktives Magnetfeld mit einer Stärke von ca. 2 mT. Bei einer optischen Leistung von 1 W wäre das fiktive Magnetfeld rechnerisch ca. 2 T groß. Zudem kann durch Variation der Intensität des Lichts der Vakuum-Wellenlänge λ' die Stärke des fiktiven Magnetfelds dynamisch eingestellt werden.

Weiterhin kann bei den beispielhaft genannten Quantenpunkten und Fremdatomen als Absorberelemente deren Arbeitspunkt mittels des an sich bekannten Stark-Effekts variiert werden, vgl. z.B. Kapitel 8.2 in F. Bassani et al., "Electronic impurity levels in semiconductors", Reports on Progress in Physics 37, 1099 (1974) oder E. Anastassakis, "Stark Effect on Impurity Levels in Diamond", Physical Review 186, 760 (1969). D.h. durch Anlegen eines elektrischen Feldes kann eingestellt werden, bei welcher Wellenlänge λ eine Absorption von Licht einer bestimmten Polarisation - und damit eine unterschiedlich starke Absorption für unterschiedlich zirkular polarisiertes Licht dieser Wellenlänge λ - stattfindet. Somit lässt sich außerdem durch Anlegen unterschiedlicher elektrischer Felder an verschiedene Teile einer Vielzahl von Absorberelementen die Bandbreite der optischen Diode einstellen. Entsprechend ist es bei einer bevorzugten Ausführung der erfindungsgemäßen optischen Diode vorgesehen, dass Mittel zur Erzeugung von mindestens einem elektrischen Feld an der Position des mindestens einen Absorberelements vorgesehen sind, um den Wert der Wellenlänge λ, bei welcher das mindestens eine Absorberelement linkszirkular polarisiertes Licht und rechtszirkular polarisiertes Licht unterschiedlich stark absorbiert, zu ändern.

Geeignete Mittel zur Erzeugung des elektrischen Feldes sind an sich bekannte Elektroden, vorzugsweise aus Metall, an welche eine konstante oder variierbare Spannung angelegt wird. Im Falle eines vorhandenen Substrats können die Elektroden auf und/oder im Substrat angeordnet sein. Die Herstellung solcher Elektroden kann in an sich bekannter Weise erfolgen, wobei in diesem Zusammenhang auf die bekannte Herstellung von Kupferbahnen auf diversen Substraten verwiesen wird.

Indem das elektrische Feld variiert wird, kann dynamisch eingestellt werden, für welches Licht der Vakuum-Wellenlänge λ₀ die optische Diode optimal funktioniert. Bzw. kann auf diese Weise auch die Bandbreite der optischen Diode dynamisch variiert werden. Entsprechend ist es bei einer besonders bevorzugten Ausführung der erfindungsgemäßen optischen Diode vorgesehen, dass das mindestens eine elektrische Feld an der Position von mindestens einem Absorberelement variierbar ist.

Eine weitere Möglichkeit für geeignete Absorberelemente der erfindungsgemäßen optischen Diode stellen plasmonische Nanostrukturen dar, die aus der wissenschaftlichen Literatur an sich bekannt sind, vgl. z.B. Mark I. Stockman, "Nanoplasmonics: past, present, and glimpse into future", Optics Express 19, 22029 (2011) oder Paolo Biagioni et al., "Nanoantennas for visible and infrared radiation", Reports on Progress in Physics 75, 024402 (2012) oder Justyna K. Gansel et al., "Gold Helix Photonic Metamaterial as Broadband Circular Polarizer", Science 325, 1513 (2009) oder Do-Hoon Kwon et al., "Optical planar chiral metamaterial designs for strong circular dichroism and polarization rotation", Optics Express 16, 11802 (2008).. Dies sind elektrisch leitfähige Nanostrukturen, deren Dimensionierung so zu wählen ist, dass sämtliche Abmessungen der jeweiligen plasmonischen Nanostruktur deutlich kleiner sind als die Vakuum-Wellenlänge λ₀ des im Wellenleiter zu leitenden Lichts. Die plasmonischen Nanostrukturen können dabei alternativ oder zusätzlich zu den bereits genannten Absorberelementen als Absorberelemente eingesetzt werden. Entsprechend ist es bei einer bevorzugten Ausführung der erfindungsgemäßen optischen Diode vorgesehen, dass als Absorberelement mindestens eine plasmonische Nanostruktur vorgesehen ist, deren größte Abmessung kleiner als die Vakuum-Wellenlänge λ₀ des im optischen Wellenleiter geleiteten Lichts ist.

Solche plasmonischen Nanostrukturen können, insbesondere auf einem Substrat, in an sich bekannter Weise, z.B. mittels lithographischer Verfahren, hergestellt werden. Vorzugsweise sind diese plasmonischen Nanostrukturen dabei aus Metall gefertigt. Entsprechend ist es bei einer bevorzugten Ausführung der erfindungsgemäßen optischen Diode vorgesehen, dass die mindestens eine plasmonische Nanostruktur aus Metall, vorzugsweise aus Gold gefertigt ist.

Um den Unterschied in der Stärke der Absorption von linkszirkular polarisiertem Licht und rechtszirkular polarisiertem Licht durch die plasmonischen Nanostrukturen zu erhöhen, ist es bei einer bevorzugten Ausführung der erfindungsgemäßen optischen Diode vorgesehen, dass die mindestens eine plasmonische Nanostruktur zumindest abschnittsweise die Form einer Spirale aufweist. Die Helizität bzw. der Drehsinn der Spirale legt dabei fest, Licht welcher Polarisation bevorzugt absorbiert wird. Stimmt die Helizität der Spirale mit der zirkularen Polarisation des Lichts am Ort der plasmonischen Nanostruktur überein, so erfolgt eine stärkere Absorption als für Licht, dessen zirkulare Polarisation entgegengesetzt zur Helizität der Spiralstruktur ist.

Wie aus dem oben Gesagten hervorgeht, lässt sich die Absorption bzw. Transmission der optischen Diode für den jeweiligen Anwendungsfall maßschneidern. Entsprechend ist es bei einer bevorzugten Ausführung der erfindungsgemäßen optischen Diode vorgesehen, dass die optische Diode so ausgelegt ist, dass die optische Diode für Licht mit Vakuum-Wellenlänge λ₀ in einer vorgegebenen Ausbreitungsrichtung im Wesentlichen transparent ist und in einer der Ausbreitungsrichtung entgegengesetzten Richtung mindestens 50%, insbesondere mindestens 75%, bevorzugt mindestens 90%, besonders bevorzugt mindestens 99% der optischen Leistung des Lichts mit Vakuum-Wellenlänge λ₀ absorbiert. "Im Wesentlichen transparent" bedeutet dabei transparent bis auf unvermeidliche Verluste der optischen Leistung aufgrund der Leitung des Lichts im körperlichen Wellenleiter bzw. Wellenleiterkern.

Wie bereits festgehalten, eignet sich die erfindungsgemäße optische Diode ideal zur Integration in integrierten optischen Schaltkreisen. Erfindungsgemäß ist daher ein integrierter optischer Schaltkreis vorgesehen, umfassend eine erfindungsgemäße optische Diode.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben. Sämtliche Darstellungen sind aus Gründen der Übersichtlichkeit und Klarheit nicht maßstabsgetreu.

Dabei zeigt:
- Fig. 1a: eine Illustration des SOKL-Prinzips bei Ausbreitung von Licht in einem auf einem Substrat angeordneten Wellenleiter in einer Ausbreitungsrichtung
- Fig. 1b: eine Darstellung analog zu Fig. 1a, jedoch mit entgegengesetzter Ausbreitungsrichtung des Lichts
- Fig. 2a: eine Prinzipskizze einer erfindungsgemäßen optischen Diode, wobei Licht in einer Ausbreitungsrichtung propagiert
- Fig. 2b: eine Darstellung analog zu Fig. 2a, jedoch mit entgegengesetzter Ausbreitungsrichtung des Lichts
- Fig. 3: eine schematische axonometrische Ansicht einer erfindungsgemäßen optischen Diode mit Quantenpunkten als Absorberelemente
- Fig. 4: eine schematische axonometrische Ansicht einer erfindungsgemäßen optischen Diode mit Fremdatomen als Absorberelemente
- Fig. 5: eine Schnittansicht einer optischen Diode gemäß Fig. 4, wobei zusätzlich eine elektrische Leiterbahn vorgesehen ist
- Fig. 6: eine schematische axonometrische Ansicht einer erfindungsgemäßen optischen Diode mit plasmonischen Nanostrukturen als Absorberelemente
- Fig. 7: eine Detaildarstellung einer plasmonischen Nanostruktur aus Fig. 6 in Aufsicht

### WEGE ZUR AUSFÜHRUNG DER ERFINDUNG

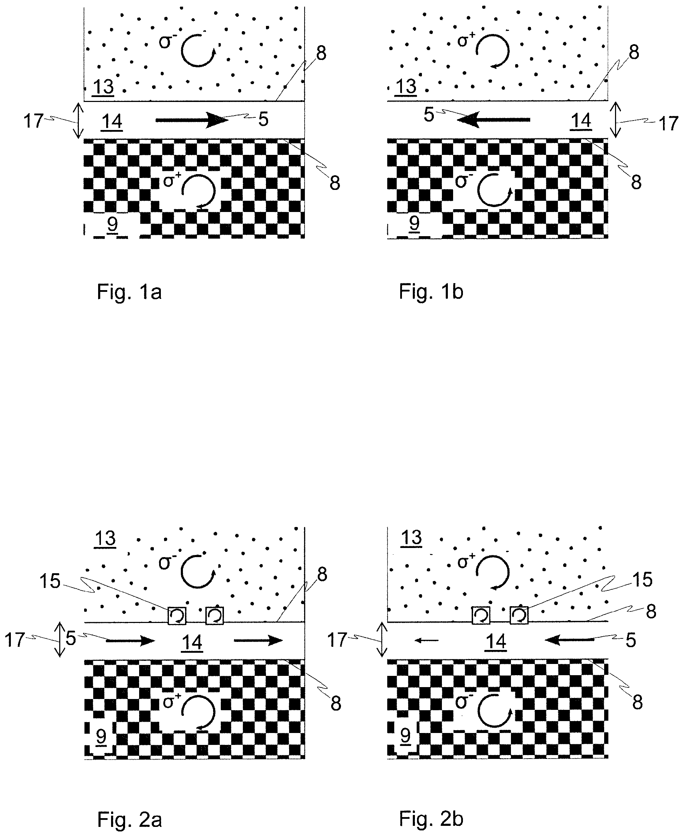

Fig. 1a zeigt eine Illustration des SOKL-Prinzips bei Ausbreitung von Licht in einem auf einem Substrat 9 angeordneten Wellenleiterkern 14 in einer Ausbreitungsrichtung 5. Das Licht ist quasi-linear polarisiert mit einer Hauptpolarisationskomponente 17, die im gezeigten Beispiel in der Zeichenebene liegt und normal auf die Ausbreitungsrichtung 5 steht. Der Wellenleiterkern 14 weist einen Brechungsindex n₁ auf. Der Wellenleiterkern 14 ist einerseits vom Substrat 9, andererseits von Luft 13 umgeben, wobei sowohl das Substrat 9 als auch die Luft 13 Brechungsindizes aufweisen, die kleiner sind als n₁. Das zu führende Licht dringt sowohl in die Luft 13 als auch in das Substrat 9 ein und liegt dort jeweils als evaneszente Welle vor. Die Intensität der jeweiligen evaneszenten Welle nimmt dabei exponentiell mit dem Abstand zu einer Oberfläche 8 des Wellenleiterkerns 14 ab, wobei die Oberfläche 8 eine optische Grenzfläche zwischen Wellenleiterkern 14 und Substrat 9 / Luft 13 bildet.

Aufgrund der geringen lateralen Abmessungen des Wellenleiterkerns 14 kommt es zum SOKL-Effekt, der sich darin äußert, dass es im Nahfeld zu einer lokalen zirkularen Polarisation des Lichts kommt. Diese zirkulare Polarisation ist abhängig von der Ausbreitungsrichtung 5 des Lichts. In Fig. 1a verläuft die Ausbreitungsrichtung 5 von links nach rechts. Die sich in der Luft 13 ausbreitende evaneszente Welle hat daher beispielsweise nahe der Oberfläche 8 eine annähernd vollständig linkszirkulare Polarisation σ⁻. Auf der gegenüberliegenden Seite des Wellenleiterkerns 14 hat die sich im Substrat 9 ausbreitende evaneszente Welle nahe der Oberfläche 8 eine genau entgegengesetzte Polarisation, im gezeigten Beispiel daher eine annähernd vollständig rechtszirkulare Polarisation σ⁺.

Wird die Ausbreitungsrichtung 5 umgedreht, kehren sich auch die durch den SOKL-Effekt hervorgerufenen lokalen zirkularen Polarisationen um. Dies ist in Fig. 1b illustriert, wo eine im Vergleich zu Fig. 1a entgegengesetzte Ausbreitungsrichtung 5 eingezeichnet ist. Entsprechend weist die sich in der Luft 13 ausbreitende evaneszente Welle nahe der Oberfläche 8 eine annähernd vollständig rechtszirkulare Polarisation σ⁺ auf und die sich auf der gegenüberliegenden Seite des Wellenleiterkerns 14 im Substrat 9 ausbreitende evaneszente Welle nahe der Oberfläche 8 eine annähernd vollständig linkszirkulare Polarisation σ⁻.

Fig. 2a zeigt nun eine erfindungsgemäße optische Diode, deren Aufbau sich zum in den Figuren 1a und 1b gezeigten Aufbau lediglich darin unterscheidet, dass nahe der Oberfläche 8 auf der der Luft 13 zugewandten Seite des Wellenleiterkerns 14 Absorberelemente 15 sitzen, die im Wesentlichen ausschließlich rechtszirkular polarisiertes Licht absorbieren. Aufgrund der in Fig. 2a gewählten Ausbreitungsrichtung 5, die mit der Ausbreitungsrichtung 5 in Fig. 1a übereinstimmt, liegt im Bereich des Nahfelds, in dem die Absorberelemente 15 angeordnet sind, lokal eine annähernd vollständige linkszirkulare Polarisation σ⁻ des Lichts vor. Folglich findet keine Absorption statt, und das Licht hat nach Passieren der Absorberelemente 15 im Wesentlichen dieselbe optische Leistung wie vor dem Passieren der Absorberelemente 15. Dies ist durch die zwei im Wesentlichen gleich großen Pfeile illustriert, die in die Ausbreitungsrichtung 5 weisen.

Die optische Diode in Fig. 2b weist exakt denselben Aufbau wie in Fig. 2a auf, jedoch verläuft in diesem Fall die Ausbreitungsrichtung 5 entgegengesetzt. Folglich liegt nun an den Positionen der Absorberelemente 15 eine umgekehrte Polarisation vor, d.h. in dem Bereich des Nahfelds, in dem die Absorberelemente 15 positioniert sind, weist das Licht eine annähernd vollständige rechtszirkulare Polarisation σ⁺ auf. Es kommt daher zu einer Absorption, wobei jedes Absorberelement 15 die gesamte optische Leistung des im Wellenleiter bzw. in der optischen Diode 1 geführten Lichts um einen gewissen Anteil erniedrigt. Insgesamt hat daher das in der Diode 1 geführte Licht nach dem Passieren der Absorberelemente 15 eine geringere optische Leistung als vor dem Passieren der Absorberelemente 15. Dies ist in Fig. 2b durch die Größenverhältnisse der in Ausbreitungsrichtung 5 weisenden Pfeile angedeutet.

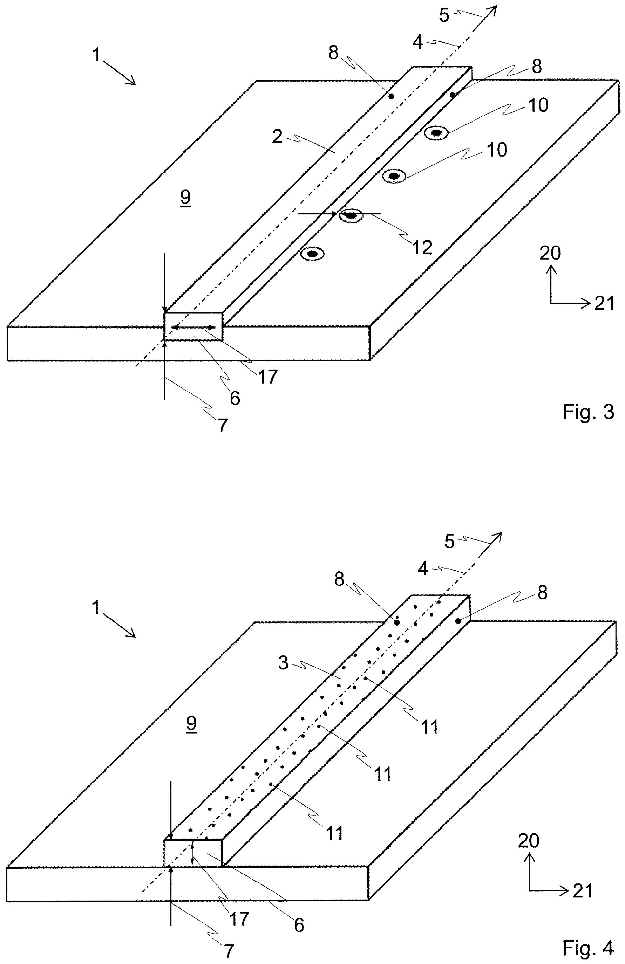

Fig. 3 zeigt eine konkrete Ausführungsform mit einem GaAs-Wellenleiterkern 2, der im Substrat 9, welches beispielsweise aus SiO₂ bestehen kann, versenkt ist. Der Wellenleiterkern 2 weist normal auf seine Längsrichtung 4 einen rechteckigen Querschnitt 6 auf, der sich entlang einer Höhenrichtung 20 und einer Breitenrichtung 21 des Wellenleiterkerns 2 erstreckt. Die Höhenrichtung 20 steht im gezeigten Beispiel normal auf eine Substratoberfläche. Entlang der Höhenrichtung 20 weist der Querschnitt 6 seine geringste Abmessung auf, die die kleinste laterale Abmessung 7 des Wellenleiterkerns 2 definiert. Die Hauptpolarisationskomponente 17 des im Wellenleiterkern 2 geführten Lichts verläuft parallel zur Breitenrichtung 21. Im Falle von Licht, dessen Vakuum-Wellenlänge λ₀ im Infrarotbereich liegt und das durch die optische Diode 1 geführt werden soll, kann Abmessung des Querschnitts 6 in Breitenrichtung 21 beispielsweise ca. 100 nm betragen.

Als Absorberelemente sind Quantenpunkte 10 vorgesehen, die eine unterschiedlich starke Absorption von links- und rechtszirkular polarisiertem Licht einer bestimmten Wellenlänge λ aufweisen. Die Quantenpunkte 10 sind auf dem Substrat 9, neben dem Wellenleiterkern 2, entlang der Längsachse 4 angeordnet. Die Quantenpunkte 10 sind dabei so angeordnet, dass sie sich im Nahfeld des im Wellenkern 2 geleiteten Lichts, das eine Vakuum-Wellenlänge λ₀ aufweist, befinden. Dies wird erreicht, indem ein Normalabstand 12 zwischen der Oberfläche 8 und den einzelnen Quantenpunkten 10 kleiner als 5*λ₀ ist.

Indem der Wellenleiterkern 2 im Substrat 9 versenkt ist, sind die Quantenpunkte 10 in Höhenrichtung 20 auf halber Höhe des Wellenleiterkerns 2 angeordnet, um eine optimale Kopplung der Quantenpunkte 10 an das Nahfeld zu ermöglichen. Je nachdem, ob das Licht im Wellenleiterkern 2 in der eingezeichneten Ausbreitungsrichtung 5 oder in der entgegengesetzten Richtung propagiert, kommt es zu entgegengesetzten zirkularen Polarisationen des Lichts am Ort der Quantenpunkte 10. Entsprechend absorbieren die Quantenpunkte 10 das Licht in Abhängigkeit von dessen Ausbreitungsrichtung 5 unterschiedlich stark. Die Stärke der Absorption kann für einen Quantenpunkt 10 z.B. bei einem Wellenleiterkern 2 mit ca. 100 nm Breite, einem Normalabstand 12 zwischen dem Quantenpunkt 10 und der Oberfläche 8 von ca. 50 nm und für Licht mit einer Vakuum-Wellenlänge λ₀ von 920 nm ca. 15% betragen.

Durch Variation der Anzahl der Absorberelemente bzw. Quantenpunkte 10 kann die Stärke der Absorption der optischen Diode 1 in Sperrrichtung variiert werden. Weiters kann durch Wahl unterschiedlicher Quantenpunkte 10 die Bandbreite der optischen Diode 10 variiert werden, indem die unterschiedlichen Quantenpunkte 10 bei unterschiedlichen Wellenlängen λ eine unterschiedlich starke Absorption für links- und rechtszirkular polarisiertes Licht aufweisen.

Fig. 4 zeigt eine weitere Ausführungsform einer erfindungsgemäßen optischen Diode 1. In diesem Fall werden als Absorberelemente Fremdatome im Wellenleiterkern 2 eingesetzt. Im gezeigten Beispiel handelt es sich um einen Si-Wellenleiterkern 3, wobei als Fremdatome Dotieratome 11, beispielsweise Bor-Atome, verwendet werden. Diese sind im Bereich der Oberfläche 8 auf einer Seite des Wellenleiterkerns 3 angeordnet. Entsprechend ist es von geringerer Bedeutung, den Wellenleiterkern 3 im Substrat 9, bei dem es sich beispielsweise um ein SiO₂-Substrat handeln kann, zu versenken. Der Wellenleiterkern 3 ist daher nur auf dem Substrat 9 angeordnet.

Die Hauptpolarisationskomponente 17 des im Wellenleiterkern 3 geführten Lichts verläuft parallel zur Höhenrichtung 20. Entsprechend sind die Dotieratome 11 nahe einer Oberfläche 8 des Wellenleiterkerns 3 angeordnet, die von der Längsachse 4 und der Breitenrichtung 21 aufgespannt wird.

Davon unabhängig, ist die kleinste laterale Abmessung 7 des Wellenleiterkerns 3 wiederum durch die Abmessung des Querschnitts 6 entlang der Höhenrichtung 20 bestimmt.

Indem die Dotieratome 11 im Wellenleiterkern 3 angeordnet sind, befinden sie sich zwangsläufig im Nahfeld. Je nachdem, ob das Licht im Wellenleiterkern 3 in der eingezeichneten Ausbreitungsrichtung 5 oder in der entgegengesetzten Richtung propagiert, kommt es zu entgegengesetzten zirkularen Polarisationen des Lichts am Ort der Dotieratome 11. Entsprechend absorbieren die Dotieratome 11 das Licht in Abhängigkeit von dessen Ausbreitungsrichtung 5 unterschiedlich stark.

Durch Variation der Anzahl der Absorberelemente bzw. Dotieratome 11 kann die Stärke der Absorption der optischen Diode 1 in Sperrrichtung variiert werden.

Zum Beispiel kann als Absorption eines einzelnen Bor-Atoms für Licht mit einer Vakuum-Wellenlänge λ₀ von 920 nm bei einer Absorptions-Bandbreite von 1 nm eine Absorption von 0,0003% angenommen werden. Für eine Absorption von 99% in Sperrrichtung sind in diesem Beispiel also rund 1,5×10⁶ Bor-Atome nötig. Verteilt auf einen Teil der Oberfläche 8 mit Kantenlänge 100 nm und einem mittleren Abstand von 5 nm der Bor-Atome benötigt man in diesem Fall einen Wellenleiterkern 3 der Länge 1,5 mm. Nimmt man jedoch realistischerweise eine drei-dimensionale Verteilung der Bor-Atome an so reduziert sich diese Länge noch um beispielsweise einen Faktor 10, wenn die Bor-Atome in 10 Atomlagen übereinander im Wellenleiterkern 3 nahe der Oberfläche 8 angeordnet sind. In letzterem Fall würde man also Dotieratome 11 lediglich auf einer Länge des Wellenleiterkerns 3 von 150 µm vorsehen müssen.

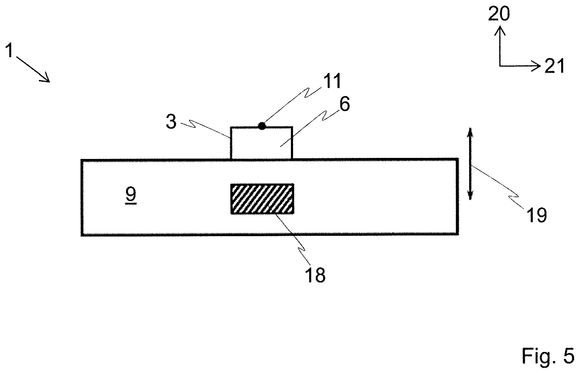

Um die optische Diode 1 für Licht unterschiedlicher Vakuum-Wellenlänge λ₀ dynamisch anpassen zu können und/oder um Bandbreite der optischen Diode 1 variieren zu können, können die Quantenpunkte 10 und/oder die Fremdatome Magnetfeldern und/oder elektrischen Feldern ausgesetzt werden. Fig. 5 illustriert dies anhand des Ausführungsbeispiels aus Fig. 4. Hierbei ist eine elektrische Leiterbahn 18 im Substrat 9 unter dem Wellenleiterkern 3 angeordnet. Indem Strom durch die Leiterbahn 18 geleitet wird, wird am Ort der Dotieratome 11 ein Magnetfeld erzeugt. Dieses kann durch Variation der Stromstärke dynamisch eingestellt werden.

Aufgrund des geringen Abstands 19 zwischen der Leiterbahn 18 und den Dotieratomen 11 können schon mit moderaten Strömen hohe Magnetfelder am Ort der Dotieratome erzeugt werden. Im gezeigten Ausführungsbeispiel kann der Abstand 19 beispielsweise ca. 1 um sein. Ein zu knapper Abstand 19 kann sich jedoch negativ auf die Leitung des Lichts im Wellenleiter auswirken, da die Leiterbahn 18 im Allgemeinen einen deutlich größeren Brechungsindex aufweist als der Wellenleiterkern 3. Der Abstand 19 sollte daher vorzugsweise zumindest größer gleich 200 nm, besonders bevorzugt größer gleich 300 nm sein.

Es versteht sich, dass völlig analog auch Permanentmagnete alternativ oder zusätzlich zur Leiterbahn 18 im oder auf dem Substrat 9 angeordnet werden können, wenngleich mit diesen lediglich konstante Magnetfelder erzeugt werden können.

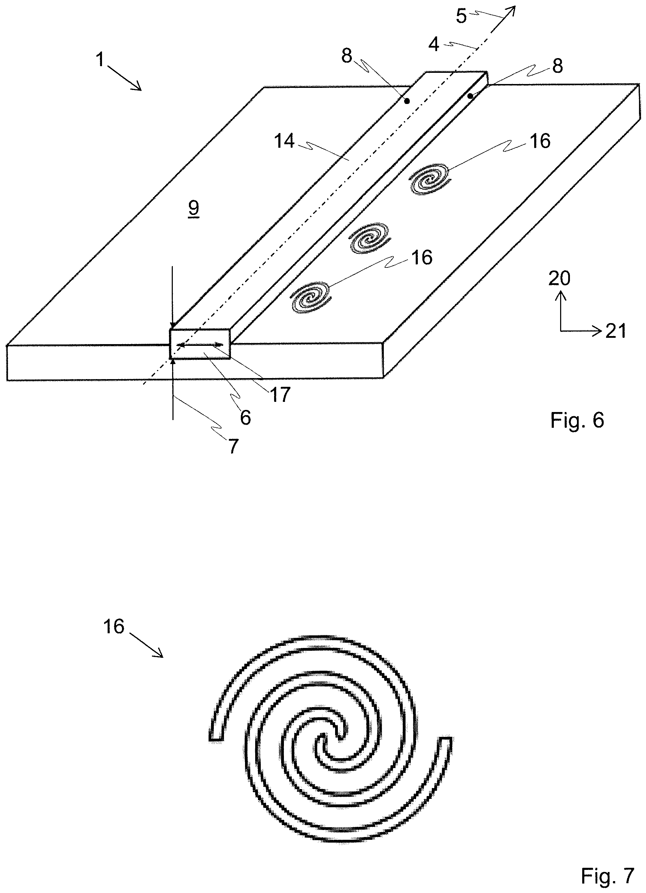

Fig. 6 zeigt schließlich eine weitere Ausführungsform der erfindungsgemäßen Diode 1, die völlig analog zur Ausführungsform der Fig. 3 aufgebaut ist, weshalb im Wesentlichen auf die Beschreibung zu Fig. 3 verwiesen wird. Im Gegensatz zur Fig. 3 sind jedoch in Fig. 6 statt der Quantenpunkte 10 plasmonische Nanostrukturen 16 als Absorberelemente vorgesehen. Diese plasmonischen Nanostrukturen 16 sind aus Metall, vorzugsweise Gold aufgebaut und so dimensioniert, dass deren größte Abmessung deutlich kleiner als die Vakuum-Wellenlänge λ₀ des im Wellenleiterkern 3 zu leitenden Lichts ist. Beispielsweise sind ein Durchmesser von 30 nm und eine Höhe bzw. Dicke von 5 nm der plasmonischen Nanostrukturen 16 für sichtbares Licht denkbar.

Fig. 7 zeigt eine vergrößerte Aufsicht auf eine plasmonische Nanostruktur 16. Hierin ist gut erkennbar, dass die plasmonische Nanostruktur 16 abschnittsweise spiralförmige ausgebildet ist. Konkret weist die dargestellte plasmonische Nanostruktur 16 die Form von zwei ineinander greifenden Spiralen auf. Die Helizität dieser Spiralen ist in der Darstellung der Fig. 7 positiv bzw. weisen die Spiralen in dieser Darstellung einen positiven Drehsinn auf. Diese geometrische Gestaltung verstärkt entsprechend die Absorption dieser plasmonischen Nanostruktur 16 für linkszirkular polarisiertes Licht.

### BEZUGSZEICHENLISTE

- 1: Optische Diode
- 2: GaAs-Wellenleiterkern
- 3: Si-Wellenleiterkern
- 4: Längsachse des Wellenleiters
- 5: Ausbreitungsrichtung
- 6: Wellenleiterquerschnitt
- 7: Kleinste laterale Abmessung des Wellenleiterkerns
- 8: Wellenleiteroberfläche
- 9: Substrat
- 10: Quantenpunkt
- 11: Dotieratom
- 12: Normalabstand zwischen der Oberfläche und einem Quantenpunkt
- 13: Luft
- 14: Wellenleiterkern
- 15: σ⁺-Absorber
- 16: Plasmonische Nanostruktur
- 17: Hauptpolarisationskomponente von im Wellenleiterkern geführtem Licht
- 18: Elektrische Leiterbahn
- 19: Abstand zwischen der elektrischen Leiterbahn und einem Dotieratom
- 20: Höhenrichtung des Wellenleiterkerns
- 21: Breitenrichtung des Wellenleiterkerns
- σ⁻: Linkszirkulare Polarisation
- σ⁺: Rechtszirkulare Polarisation

## Patentansprüche

1. Optische Diode (1) umfassend einen optischen Wellenleiter zur Leitung von Licht, vorzugsweise einer Lichtmode, mit einer Vakuum-Wellenlänge λ₀, wobei der optische Wellenleiter einen Wellenleiterkern (2, 3, 14) mit einem ersten Brechungsindex n₁ aufweist und der Wellenleiterkern (2, 3, 14) von mindestens einem zweiten optischen Medium umgeben ist, welches mindestens einen zweiten Brechungsindex n₂ aufweist, wobei n₁ > n₂ gilt, wobei der Wellenleiterkern (2, 3, 14) zumindest abschnittsweise eine kleinste laterale Abmessung (7) aufweist, die eine kleinste Abmessung eines Querschnitts (6) normal auf eine Ausbreitungsrichtung (5) des Lichts im Wellenleiterkern (2, 3, 14) ist, wobei die kleinste laterale Abmessung (7) größer gleich λ₀/(5*n₁) und kleiner gleich 20*λ₀/n₁ ist, wobei die optische Diode (1) weiters mindestens ein Absorberelement (10, 11, 15, 16) umfasst, das in einem Nahfeld angeordnet ist, wobei das Nahfeld aus dem elektromagnetische Feld des Lichts der Vakuum-Wellenlänge λ₀ im Wellenleiterkern (2, 3, 14) und außerhalb des Wellenleiterkerns (2, 3 ,14) bis zu einem Normalabstand (12) von 5*λ₀ besteht, wobei der Normalabstand (12) von einer eine optische Grenzfläche ausbildenden Oberfläche (8) des Wellenleiterkerns (2, 3, 14) aus und in einer Richtung normal auf die Oberfläche (8) gemessen ist, **dadurch gekennzeichnet, dass** das mindestens eine Absorberelement (10, 11, 15, 16) für das Licht der Vakuum-Wellenlänge λ₀ bei linkszirkularer Polarisation (σ⁻) einerseits und bei rechtszirkularer Polarisation (σ⁺) andererseits eine unterschiedlich starke Absorption aufweist.

2. Optische Diode (1) nach Anspruch 1, **dadurch**
**gekennzeichnet, dass** der Wellenleiterkern (2, 3, 14) auf einem Substrat (9) angeordnet ist, wobei der Wellenleiterkern (2) vorzugsweise zumindest abschnittsweise im Substrat (9) versenkt ist.

3. Optische Diode (1) nach einem der Ansprüche 1 bis 2,
**dadurch gekennzeichnet, dass** als das mindestens eine Absorberelement mindestens ein, vorzugsweise einfach geladener Quantenpunkt (10) vorgesehen ist.

4. Optische Diode (1) nach Anspruch 3, **dadurch**
**gekennzeichnet, dass** der mindestens eine Quantenpunkt (10) außerhalb des Wellenleiterkerns (2) angeordnet ist.

5. Optische Diode (1) nach einem der Ansprüche 3 bis 4,
**dadurch gekennzeichnet, dass** eine Vielzahl von Quantenpunkten (10) vorgesehen ist und dass die Vielzahl an Quantenpunkten (10) Quantenpunkte (10) umfasst, die für Licht unterschiedlicher Wellenlänge bei linkszirkularer Polarisation (σ⁻) einerseits und bei rechtszirkularer Polarisation (σ⁺) andererseits eine unterschiedlich starke Absorption aufweisen.

6. Optische Diode (1) nach einem der Ansprüche 1 bis 5,
**dadurch gekennzeichnet, dass** eine Vielzahl von Absorberelementen vorgesehen ist, wobei Fremdatome (11) im Wellenleiterkern (3) als Absorberelemente vorgesehen sind.

7. Optische Diode (1) nach Anspruch 6, **dadurch**
**gekennzeichnet, dass** der Wellenleiterkern (3) aus einem Halbleitermaterial besteht und die Fremdatome (11) Dotieratome für das Halbleitermaterial sind.

8. Optische Diode (1) nach einem der Ansprüche 1 bis 7,
**dadurch gekennzeichnet, dass** Mittel zur Erzeugung von mindestens einem Magnetfeld an der Position des mindestens einen Absorberelements (10, 11) vorgesehen sind, um den Unterschied zwischen der Stärke der Absorption von linkszirkular polarisiertem (σ⁻) Licht der Vakuum-Wellenlänge λ₀ durch das mindestens eine Absorberelement (10, 11) und der Stärke der Absorption von rechtszirkular polarisiertem (σ⁺) Licht der Vakuum-Wellenlänge λ₀ durch das mindestens eine Absorberelement (10, 11) zu verstärken.

9. Optische Diode (1) nach Anspruch 8, **dadurch**
**gekennzeichnet, dass** eine Vielzahl von Absorberelementen (10, 11) vorgesehen ist und dass das mindestens eine Magnetfeld derart ausgebildet ist, dass verschiedene Teile der Vielzahl an Absorberelementen (10, 11) unterschiedlich starken Magnetfeldern ausgesetzt sind.

10. Optische Diode (1) nach einem der Ansprüche 8 bis 9,
**dadurch gekennzeichnet, dass** es sich bei dem mindestens einen Magnetfeld um ein sogenanntes fiktives Magnetfeld handelt, wobei zur Erzeugung des fiktiven Magnetfeldes im optischen Wellenleiter geleitetes Licht mit einer Vakuum-Wellenlänge λ' vorgesehen ist, wobei λ' ≠ λ₀ gilt und das mindestens eine Absorberelement (10, 11) in einem weiteren Nahfeld angeordnet ist, welches weitere Nahfeld aus dem elektromagnetische Feld des Lichts der Vakuum-Wellenlänge λ' im Wellenleiterkern (2, 3, 14) und außerhalb des Wellenleiterkerns (2, 3, 14) bis zu einem Normalabstand (12) von 5*λ' besteht.

11. Optische Diode (1) nach einem der Ansprüche 1 bis 10,
**dadurch gekennzeichnet, dass** Mittel zur Erzeugung von mindestens einem elektrischen Feld an der Position des mindestens einen Absorberelements (10, 11) vorgesehen sind, um den Wert der Wellenlänge λ, bei welcher das mindestens eine Absorberelement (10, 11) linkszirkular polarisiertes (σ⁻) Licht und rechtszirkular polarisiertes (σ⁺) Licht unterschiedlich stark absorbiert, zu ändern.

12. Optische Diode (1) nach Anspruch 11, **dadurch**
**gekennzeichnet, dass** das mindestens eine elektrische Feld an der Position von mindestens einem Absorberelement (10, 11) variierbar ist.

13. Optische Diode (1) nach einem der Ansprüche 1 bis 12,
**dadurch gekennzeichnet, dass** als Absorberelement mindestens eine plasmonische Nanostruktur (16) vorgesehen ist, deren größte Abmessung kleiner als die Vakuum-Wellenlänge λ₀ des im optischen Wellenleiter geleiteten Lichts ist.

14. Optische Diode (1) nach Anspruch 13, **dadurch**
**gekennzeichnet, dass** die mindestens eine plasmonische Nanostruktur (16) aus Metall, vorzugsweise aus Gold gefertigt ist.

15. Optische Diode (1) nach einem der Ansprüche 13 bis 14, **dadurch gekennzeichnet, dass** die mindestens eine plasmonische Nanostruktur (16) zumindest abschnittsweise die Form einer Spirale aufweist.

## Claims

1. Optical diode (1) comprising an optical waveguide for conducting light, preferably a light mode, having a vacuum wavelength λ₀, where the optical waveguide has a waveguide core (2, 3, 14) having a first refractive index n₁ and the waveguide core (2, 3, 14) is surrounded by at least one second optical medium, which has at least one second refractive index n₂, where n₁> n₂, where the waveguide core (2, 3, 14) has, at least in segments, a smallest lateral dimension (7), which is a smallest dimension of a cross section (6) perpendicular to a direction of propagation (5) of the light in the waveguide core (2, 3, 14), where the smallest lateral dimension (7) is greater than or equal to λ₀/(5*n₁) and is less than or equal to 20*λ₀/n₁, where the optical diode (1) additionally comprises at least one absorber element (10, 11, 15, 16), which is disposed in a near field, where the near field consists of the electromagnetic field of the light of the vacuum wavelength λ₀ in the waveguide core (2, 3, 14) and outside of the waveguide core (2, 3, 14) up to a standard distance (12) of 5*λ₀, where the standard distance (12) is measured from a surface (8) of the waveguide core (2, 3, 14) that forms an optical interface and in a direction perpendicular to the surface (8), **characterized in that** the at least one absorber element (10, 11, 15, 16) exhibits a differently strong absorption for the light having the vacuum wavelength λ₀ when it has left-circular polarization (σ⁻) on the one hand and when it has right-circular polarization (σ⁺) on the other.

2. Optical diode (1) according to Claim 1, **characterized in that** the waveguide core (2, 3, 14) is disposed on a substrate (9), wherein the waveguide core (2) preferably is, at least in segments, recessed in substrate (9).

3. Optical diode (1) according to one of Claims 1 to 2, **characterized in that** at least one, preferably singly charged, quantum dot (10) is provided as the at least one absorber element.

4. Optical diode (1) according to Claim 3, **characterized in that** the at least one quantum dot (10) is disposed outside of the waveguide core (2).

5. Optical diode (1) according to one of Claims 3 to 4, **characterized in that** a plurality of quantum dots (10) is provided and **in that** the plurality of quantum dots (10) comprises quantum dots (10) that have differently strong absorption for light of different wavelength in the case of left circular polarization (σ⁻) on the one hand and in the case of right-circular polarization (σ⁺) on the other.

6. Optical diode (1) according to one of Claims 1 to 5, **characterized in that** a plurality of absorber elements is provided, wherein foreign atoms (11) are provided in the waveguide core (3) as absorber elements.

7. Optical diode (1) according to Claim 6, **characterized in that** the waveguide core (3) consists of a semiconductor material and the foreign atoms (11) are doping atoms for the semiconductor material.

8. Optical diode (1) according to one of Claims 1 to 7, **characterized in that** means for generation of at least one magnetic field at the position of the at least one absorber element (10, 11) are provided, in order to enhance the difference between the strength of absorption of left-circularly polarized (σ⁻) light of vacuum wavelength λ₀ by the at least one absorber element (10, 11) and the strength of absorption of right-circularly polarized (σ⁺) light of the vacuum wavelength λ₀ by the at least one absorber element (10, 11).

9. Optical diode (1) according to Claim 8, **characterized in that** a plurality of absorber elements is provided and **in that** the at least one magnetic field is made so that different parts of the plurality of absorber elements (10, 11) are exposed to magnetic fields of different strengths.

10. Optical diode (1) according to one of Claims 8 to 9, **characterized in that** the at least one magnetic field is a so-called imaginary magnetic field, where light having a vacuum wavelength λ' that is being guided in the optical waveguide is provided for generation of the imaginary magnetic field, where λ' ≠ λ₀ and the at least one absorber element (10, 11) is disposed in another near field, which other near field consists of the electromagnetic field of the light of vacuum wavelength λ' in the waveguide core (2, 3, 14) and outside the waveguide core (2, 3, 14) up to a standard distance (12) of 5*λ'.

11. Optical diode (1) according to one of Claims 1 to 10, **characterized in that** means for generation of at least one electric field at the position of the at least one absorber element (10, 11) are provided, in order to change the value of the wavelength λ at which the at least one absorber element (10, 11) absorbs left-circularly polarized (σ⁻) light and right right-circularly polarized (σ⁺) light with different strength.

12. Optical diode (1) according to Claim 11, **characterized in that** the at least one electric field is variable at the position of at least one absorber element (10, 11).

13. Optical diode (1) according to one of Claims 1 to 12, **characterized in that** at least one plasmonic nanostructure (16), the greatest dimension of which is smaller than the vacuum wavelength λ₀ of the light guided in the optical waveguide, is provided as absorber element.

14. Optical diode (1) according to Claim 13, **characterized in that** the at least one plasmonic nanostructure (16) is made of metal, preferably gold.

15. Optical diode (1) according to one of Claims 13 to 14, **characterized in that** the at least one plasmonic nanostructure (16) has, at least in segments, the shape of a spiral.

## Revendications

1. Diode optique (1) comprenant un guide d'ondes optique pour guider de la lumière, de préférence d'un mode lumineux, avec une longueur d'onde dans le vide λ₀, dans laquelle le guide d'ondes optique présente un coeur de guide d'ondes (2, 3, 14) ayant un premier indice de réfraction n₁ et le coeur de guide d'ondes (2, 3, 14) est entouré par au moins un deuxième matériau optique qui a au moins un deuxième indice de réfraction n₂, où n₁ > n₂, le coeur de guide d'ondes (2, 3, 14) présentant au moins par sections une dimension latérale minimale (7) qui est une dimension latérale minimale d'une section (6) perpendiculaire à une direction de propagation (5) de la lumière dans le coeur de guide d'ondes (2, 3, 14), la dimension latérale minimale (7) étant supérieure ou égale à λ₀/(5*n₁) et inférieure ou égale à 20*λ₀/n₁, la diode optique (1) comprenant en outre au moins un élément absorbeur (10, 11, 15, 16) qui est disposé dans un champ proche, lequel champ proche se compose du champ électromagnétique de la lumière de longueur d'onde dans le vide λ₀ dans le coeur de guide d'ondes (2, 3, 14) et en dehors du coeur de guide d'ondes (2, 3, 14) jusqu'à une distance perpendiculaire (12) de 5*λ₀, la distance perpendiculaire (12) étant mesurée à partir d'une surface (8) du coeur de guide d'ondes (2, 3, 14) formant une surface de délimitation optique et dans une direction perpendiculaire à la surface (8), **caractérisée en ce que** l'au moins un élément absorbeur (10, 11, 15, 16) présente une absorption différente pour la lumière de longueur d'onde dans le vide λ₀ avec une polarisation circulaire à gauche (σ⁻), d'une part, et une polarisation circulaire à droite (σ⁺), d'autre part.

2. Diode optique (1) selon la revendication 1, **caractérisée en ce que** le coeur de guide d'ondes (2, 3, 14) est disposé sur un substrat (9), le coeur de guide d'ondes (2) étant de préférence enfoncé au moins en partie dans le substrat (9).

3. Diode optique (1) selon l'une des revendications 1 à 2, **caractérisée en ce qu'**un point quantique (10), de préférence à charge simple, est prévu pour former l'au moins un élément absorbeur.

4. Diode optique (1) selon la revendication 3, **caractérisée en ce que** l'au moins un point quantique (10) est disposé à l'extérieur du coeur de guide d'ondes (2).

5. Diode optique (1) selon l'une des revendications 3 à 4, **caractérisée en ce que** plusieurs points quantiques (10) sont prévus et **en ce que** les plusieurs points quantiques (10) comprennent des points quantiques (10) qui présentent une absorption différente pour la lumière de longueur d'onde différente avec une polarisation circulaire à gauche (σ⁻), d'une part, et une polarisation circulaire à droite (σ⁺), d'autre part.

6. Diode optique (1) selon l'une des revendications 1 bis 5, **caractérisée en ce que** plusieurs éléments absorbeurs sont prévus, des atomes exogènes (11) étant prévus dans le coeur de guide d'ondes (3) pour servir d'éléments absorbeurs.

7. Diode optique (1) selon la revendication 6, **caractérisée en ce que** le coeur de guide d'ondes (3) se compose d'un matériau semi-conducteur et les atomes exogènes (11) sont des atomes de dopage pour le matériau semi-conducteur.

8. Diode optique (1) selon l'une des revendications 1 à 7, **caractérisée en ce que** des moyens sont prévus pour créer au moins un champ magnétique dans la position de l'au moins un élément absorbeur (10, 11) afin d'accentuer la différence entre la force de l'absorption de la lumière de longueur d'onde dans le vide λ₀ polarisée vers la gauche (σ⁻) par l'au moins un élément absorbeur (10, 11) et la force de l'absorption de la lumière de longueur d'onde dans le vide λ₀ polarisée vers la droite (σ⁺) par l'au moins un élément absorbeur (10, 11).

9. Diode optique (1) selon la revendication 8, **caractérisée en ce que** plusieurs éléments absorbeurs (10, 11) sont prévus et **en ce que** l'au moins un champ magnétique est constitué de telle manière que différentes parties des plusieurs éléments absorbeurs (10, 11) sont exposées à des champs magnétiques d'intensité différente.

10. Diode optique (1) selon l'une des revendications 8 à 9, **caractérisée en ce que** l'au moins un champ magnétique est un champ magnétique dit fictif, une lumière de longueur d'onde dans le vide λ' acheminée dans le guide d'ondes optiques étant prévue pour la génération du champ magnétique fictif, où λ' ≠ λ₀, et l'au moins un élément absorbeur (10, 11) étant disposé dans un autre champ proche, lequel autre champ proche est formé du champ électromagnétique de la lumière de longueur d'onde dans le vide λ' dans le coeur de guide d'ondes (2, 3, 14) et en dehors du coeur de guide d'ondes (2, 3, 14) jusqu'à une distance perpendiculaire (12) de 5*λ'.

11. Diode optique (1) selon l'une des revendications 1 à 10, **caractérisée en ce que** des moyens pour la génération d'au moins un champ électrique dans la position de l'au moins un élément absorbeur (10, 11) sont prévus pour modifier la valeur de la longueur d'onde λ à laquelle l'au moins un élément absorbeur (10, 11) absorbe différemment la lumière de polarisation circulaire à gauche (σ⁻) et la lumière polarisée à droite (σ⁺).

12. Diode optique (1) selon la revendication 11, **caractérisée en ce que** l'au moins un champ électrique est variable dans la position d'au moins un élément absorbeur (10, 11).

13. Diode optique (1) selon l'une des revendications 1 à 12, **caractérisée en ce que** l'élément absorbeur prévu est au moins une nanostructure plasmonique (16) dont la plus grande dimension est plus petite que la longueur d'onde dans le vide λ₀ de la lumière acheminée dans le guide d'ondes optique.

14. Diode optique (1) selon la revendication 13, **caractérisé en ce que** l'au moins une nanostructure plasmonique (16) est faite de métal, de préférence d'or.

15. Diode optique (1) selon l'une des revendications 13 à 14, **caractérisée en ce que** l'au moins une nanostructure plasmonique (16) présente au moins en partie la forme d'une spirale.
